Europäisches Patentamt

(19) European Patent Office

Office européen des brevets

(11) Publication number : **0 197 671**
**B1**

(12) **EUROPEAN PATENT SPECIFICATION**

(45) Date of publication of patent specification :
23.11.89

(21) Application number : **86301794.3**

(22) Date of filing : **12.03.86**

(51) Int. Cl.⁴ : **A 21 C   3/02**

⑤⑷ **Dough handling apparatus.**

(30) Priority : **12.03.85 JP 49108/85**

(43) Date of publication of application :
**15.10.86 Bulletin 86/42**

(45) Publication of the grant of the patent :
**23.11.89 Bulletin 89/47**

(84) Designated contracting states :
**AT BE CH DE FR GB IT LI NL SE**

(56) References cited :
**EP—A— 0 011 355**
**US—A— 4 046 920**
**US—A— 4 192 636**

(73) Proprietor : **RHEON AUTOMATIC MACHINERY CO.**
**LTD.**
**2-3, Nozawa-machi**
**Utsunomiya-shi Tochigi-ken (JP)**

(72) Inventor : **Morikawa, Michio**
**3414-106, Ishii-machi**
**Utsunomiya-shi Tochigi-ken (JP)**
Inventor : **Hayashi, Torahiko**
**304, Nozawa-machi**
**Utsunomiya-shi Tochigi-ken (JP)**

(74) Representative : **Leale, Robin George et al**
**FRANK B. DEHN & CO. Imperial House 15-19**
**Kingsway**
**London WC2B 6UZ (GB)**

**Description**

This invention relates to dough handling apparatus and particularly to apparatus for continuously producing a strip of dough of substantially constant transverse dimensions at a substantially constant flow rate.

Continuous feeding of dough having elasticity and viscosity, such as bread dough, has in the past been carried out either by extrusion, using a screw apparatus, or by suction and extrusion using an extruder with a piston and a cylinder.

These apparatus, however, basically rely upon mechanical forces to form continuous dough strips. An excessive pressure is frequently imparted to the dough fed, or the dough is frequently severed by the screw during stirring.

Such mechanical forces harm the dough structure, especially that of bread dough. Thus the gel structure of the dough tends to be destroyed due to the pressure or stirring, and an extra processing step is then required to recover the gel structure. Such a step requires an extra device, and thus the size of the dough processing apparatus becomes bulky.

In our European Patent Application No. 85 302 435.4, filed on April 4, 1985, we disclose a variable speed conveyor having a weighing device, a constant speed conveyor arranged downstream of and adjacent to the variable speed conveyor, and two pressing means disposed above and adjacent the downstream end of the variable speed conveyor and the upstream end of the constant speed conveyor, respectively. The dough is compressed or stretched between the two positions where the respective pressing means are disposed, to be made into dough having a constant weight per unit length.

Furthermore, an apparatus for producing a strip of dough having constant transverse dimensions and a constant flow rate is disclosed in our European Patent Application No. 85 302 501.3 filed on April 9, 1985, in which a roller mechanism replaces the pressing means disposed above and adjacent the upstream end of the constant speed conveyor in the apparatus of the first-mentioned European patent application.

In the apparatus of the latter European patent application, dough width defining means is further provided between a straight portion of the said roller mechanism and the conveying path of the said constant speed conveyor, and the dough is similarly compressed or stretched between two positions, namely between the position where the pressing means above the downstream end of the variable speed conveyor is located and the position where the dough comes into contact with the roller mechanism.

In the apparatus of these two earlier applications, although the dough fed between the said two positions may be effectively compressed by increasing the speed of the variable speed conveyor when the weight of dough per unit length on that conveyor is smaller than a predetermined value, the dough cannot be uniformly stretched when the weight of dough per unit length is larger than said predetermined value. This is because the dough between the pressing means and the variable speed conveyor is controlled in the region where the pressing means abuts the dough, and thus only the dough portion in or near that region can be directly controlled by the pressing means so as to move together with the movement of the pressing means, but the dough portion leaving the said region is not effectively controlled by the pressing means. Therefore, if there is a relatively thinner portion in the dough, only that portion of dough is stretched, whereby the said thinner portion of dough becomes even thinner. As a result, stress is liable to converge on such a thinner portion when the dough is stretched.

It is known from US-A-4 192 636 to provide apparatus for continuously producing at a substantially constant flow rate a strip of dough of substantially constant transverse dimensions, comprising: a plurality of conveyors arranged in series, dough holding means including a roller mechanism arranged to hold the dough on the said conveyors, the said roller mechanism comprising a plurality of rollers rotatable about their axes and movable along a path which includes a straight portion extending above portions of the said conveyors, so as to hold the dough between the roller mechanism and the conveyors. In this known arrangement the conveyors are operated at constant speeds.

From EP-A-0 011 355 it is known to provide a pair of variable speed conveyors for extruded elastomeric stock, wherein the speed difference between the conveyors is controlled in response to a comparison between a measured weight per unit length of the extrusion and a target value thereof. There is however no means arranged above the conveyors for holding the extrusion thereon, with the result that the thickness of the extrusion may not be reliably controlled.

According to the invention apparatus as discussed above in connection with US-A-4 192 636 is characterised in that the conveyors comprise a variable speed conveyor for feeding dough, and a constant speed conveyor arranged downstream of and adjacent to said variable speed conveyor, and in that the apparatus further comprises a dough weighing device for continuously measuring the weight of each portion of the dough conveyed past the said weighing device, the weighing device being located between the ends of the conveying path of the said variable speed conveyor, a control unit for controlling the speed of the variable speed conveyor at a speed inversely proportional to the weight of a dough portion measured by the dough weighing device, and dough width limiting means positioned on the conveying path of the said constant speed conveyor.

Thus a preferred apparatus according to the present invention comprises a variable speed conveyor which is provided with a dough weighing device and is driven at a variable speed in response to weight measurements of dough fed onto the conveyor, a constant speed conveyor which is arranged adjacent the variable speed conveyor and is driven at a constant speed higher than that of the variable speed conveyor, and in the conveying path of which dough width defining means is positioned to define the width of dough, and a roller mechanism including a plurality of rollers movable along a path having a straight portion. The straight portion of the said roller path is located above portions of both the variable speed conveyor and the constant speed conveyor. The dough fed between the roller mechanism and the conveyors is thereby uniformly thickened or stretched in response to the weight measured by the said weighing device, to produce a strip of dough at a constant flow rate.

Since the said straight portion of the roller path uniformly holds the dough, the speed difference between the two conveyors effectively causes the dough between the two conveyors to be evenly stretched. In other words, the roller mechanism causes the dough to uniformly engage the belts of the two conveyors, thereby effectively thickening or stretching it so as to accurately quantify the flow rate of the dough.

An embodiment of the invention will now be described by way of example and with reference to the accompanying drawings, in which :

Fig. 1 is a schematic side elevation view of an embodiment of the present invention ;

Fig. 2 is a schematic plan view of the embodiment ; and

Fig. 3 is a block diagram of a control unit showing its main components.

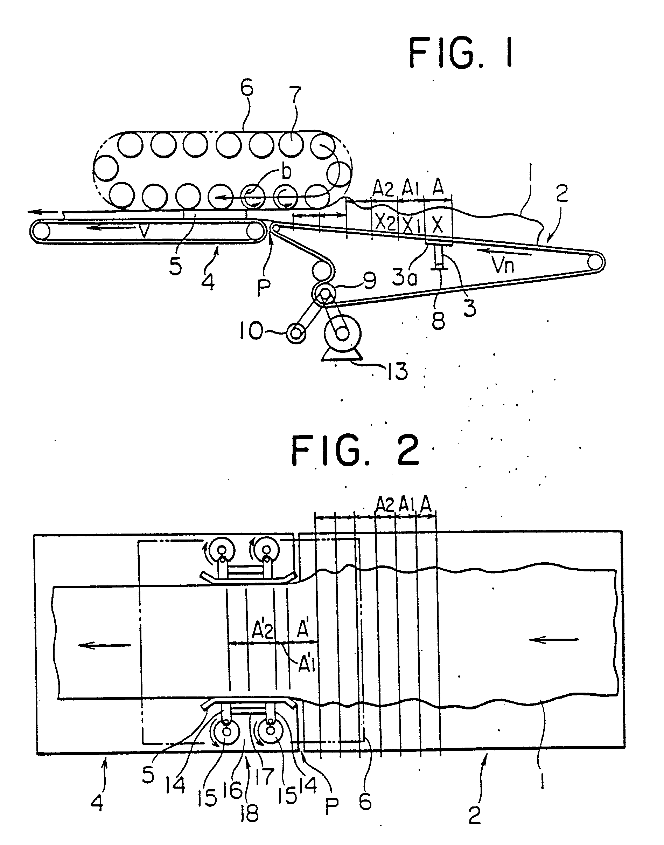

Referring first to Fig. 1, a dough feed conveyor 2 is positioned at the upstream part of the apparatus and has a top flat flight which is slightly inclined, increasing in height in the downstream direction. The dough feed conveyor 2 is driven at a variable speed Vn by a driven roller 9 which is operated by a motor 13. A rotation transducer 10 is operatively associated with the driven roller 9 and functions to generate pulses indicative of the length of movement of the belt of the dough feed conveyor 2. A weighing table 3a of a weighing device 3 is disposed under the belt of the dough feed conveyor 2, and generates by means of a load sensor 8 signals showing the weight X of a portion of dough passing over the weighing table 3a.

A constant speed conveyor 4 is arranged downstream of and adjacent the dough feed conveyor 2 and has a horizontally positioned flat top flight. It is driven by a motor (not shown) at a constant speed V, higher than that of the dough feed conveyor 2.

Dough width limiting means 18 (Fig. 2) is disposed on the upper flight or the conveying path of the constant speed conveyor 4, and comprises a crank mechanism 16 and width limiting plates 5, the plates 5 being supported by rods 14 which are connected by a connecting rod 17. The outer end of each rod 14 is rotatably mounted on a peripheral portion of a respective disc 15, the shafts of which are mounted on the frame of the apparatus, and the discs 15 are rotated by a drive unit (not shown). As a result, when the discs 15 rotate as shown by the arrows, the plates 5 make rotary swinging motions while staying parallel to the direction of movement of the dough 1.

A roller mechanism 6 extends above both of the conveyors 2 and 4, as shown in Fig. 1. The roller mechanism comprises a plurality of rollers 7 which are movable by a drive unit (not shown) around an oval circuit which includes a straight portion facing the two conveyors. During such movement the rollers are caused to rotate about their own axes by friction with the dough, as shown by arrow « b ». The said straight portion of the roller mechanism overlaps the downstream and region of the dough feed conveyor 2 over a length of about 50 to 200 mm, and concurrently overlaps the upstream end region of the constant speed conveyor 4 over a length of about 50 to 300 mm. The overlapped regions may be either longer or shorter than the aforesaid distances. The selected lengths of the overlapped regions depend on the physical properties of the material to be treated, for instance its elasticity, viscosity, or consistency.

The operation of this embodiment of the invention will now be described. Dough charged onto the dough feed conveyor 2 passes over the weighing table 3a, where its weight Xn is continuously measured for every unit length A, such as $X_1$ and $X_2$ for $A_1$ and $A_2$ respectively. The necessary relationship between a desired reference weight value $X_R$ per unit time, that is a desired flow rate of dough, the measured dough weight Xn per unit length A, and the speed Vn of the dough feed conveyor 2, is as follows :

$$V \cdot X_R = Xn \cdot Vn = Constant$$

where V is the speed of the constant speed conveyor 4.

Therefore, the speed Vn may be calculated from the following formula :

$$Vn = (V \cdot X_R)/Xn$$

Accordingly, with respect to a dough portion having a measured weight $X_1$, the following formula can be applied :

$$V_1 = (V \cdot X_R)/X_1$$

where $V_1$ is the speed at which the dough feed conveyor 2 should be run when a dough portion with a measured weight $X_1$ reaches the downstream end P of the conveyor 2. It is a speed at which a constant flow rate of dough would be attained.

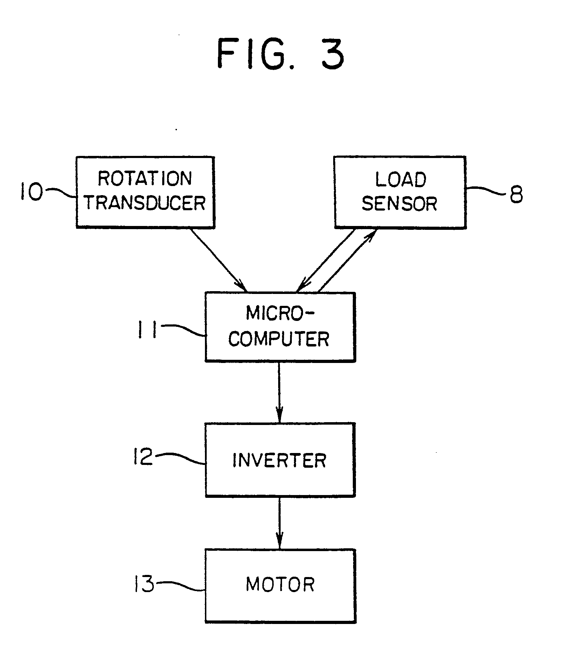

The transducer 10 generates pulses indicative of the length of the movements of the belt of the dough feed conveyor 2, and transmits them to a microcomputer 11, as shown in Fig. 3. The microcomputer 11 then sends signals to the load sensor 8 to cause it to weigh the dough. Signals indicative of the weight of the dough are sent to the microcomputer 11, which stores this information and calculates the necessary speed $V_1$ of the dough feed conveyor 2 in accordance with the formula, and transmits signals, through an inverter 12, to the motor 13 to operate it when the corresponding dough portion reaches the downstream end P of the dough feed conveyor 2. Thus the motor 12 is driven at speed $V_1$ inversely proportional to the weight $X_1$, so that the corresponding dough portion is then either thickened or stretched by the difference in speed between the two conveyors and the holding action of the roller mechanism extending over the conveyors.

Thus, each dough portion of weight $X_1$, $X_2$, etc., is thickened or stretched between the downstream end P of the dough feed conveyor 2 and the upstream end of the constant speed conveyor 4 in accordance with speeds $V_1$, $V_2$, etc., namely speeds inversely proportional to the weight of each portion of the dough.

The width of the thus produced dough is then adjusted by the dough width limiting means 18, specifically by the width limiting plates 5, so as to make it uniform throughout the dough strip.

In this embodiment of the present invention the direction of movement of the rollers 7 along the conveying path is the same as that of the dough, but a similar flat holding action can also be imparted if the rollers 7 are moved in the reverse direction.

Although in this embodiment an endless roller mechanism is used, a roller mechanism having only a straight roller path may alternatively be used. This roller mechanism may consist of a plurality of rollers mounted horizontally between a pair of side frames so as to provide a straight roller path, and arranged to rotate freely about their axes. The rotatability of the rollers may if desired be restricted by their engagement with a friction plate mounted on the frame of the apparatus. Such a roller mechanism may he driven by a drive mechanism to move back and forth on the dough surface. By arranging such a roller mechanism above both the dough feed conveyor 2 and the constant speed conveyor 4, and causing its said frame to move back and forth, the rollers engaging the material on the two conveyors effectively thicken or stretch the material, thereby attaining the desired quantification of the flow rate and uniform dimensions of the material.

## Claims

1. Apparatus for continuously producing at a substantially constant flow rate a strip of dough of substantially constant transverse dimensions, comprising :
a plurality of conveyors (2, 4) arranged in series, dough holding means including a roller mechanism (6) arranged to hold the dough on the said conveyors (2, 4), the said roller mechanism (6) comprising a plurality of rollers (7) rotatable about their axes and movable along a path which includes a straight portion extending above portions of the said conveyors (2, 4), so as to hold the dough between the roller mechanism and the conveyors, characterised in that the conveyors comprise a variable speed conveyor (2) for feeding dough, and a constant speed conveyor (4) arranged downstream of and adjacent to said variable speed conveyor (2), and in that the apparatus further comprises a dough weighing device (3) for continuously measuring the weight of each portion of the dough conveyed past the said weighing device, the weighing device (3) being located between the ends of the conveying path of the said variable speed conveyor (2), a control unit (11) for controlling the speed of the variable speed conveyor (2) at a speed inversely proportional to the weight of a dough portion measured by the dough weighing device (3), and dough width limiting means (18) positioned on the conveying path of the said constant speed conveyor.

2. Apparatus as claimed in claim 1, wherein the said roller mechanism (6) comprises freely-rotatable rollers (7) arranged around an endless roller path, the peripheries of the moving rollers forming a closed envelope, the rollers being arranged to progress along the said path while being rotated by their contact with the dough.

3. Apparatus as claimed in claim 1, wherein the said roller mechanism comprises freely-rotatable rollers arranged on a straight roller path, the rollers being movable back and forth by drive means.

## Patentansprüche

1. Vorrichtung zur kontinuierlichen Herstellung eines Teigstreifens von im wesentlichen konstanten Querabmessungen mit im wesentlichen konstanter Fließgeschwindigkeit, umfassend :
eine Mehrzahl von in Serie angeordneten Förderern (2, 4), eine Teighaltevorrichtung umfassend einen Rollenmechanismus (6) zum Halten des Teiges auf den Förderern (2, 4), wobei dieser Rollenmechanismus (6) eine Mehrzahl von Rollen (7) umfaßt, die um ihre Achsen drehbar und entlang einer Bahn bewegbar sind, die einen geraden, sich über Abschnitten des Förderers (2, 4) erstreckenden Abschnitt inkludiert, um den Teig zwischen dem Rollenmechanismus und den Förderern zu halten, dadurch gekennzeichnet, daß die Förderer einen Förderer (2) mit variabler Geschwindigkeit zum Zuführen des Teiges, und einen flußabwärts vom und angrenzend an den Förderer (2) mit variabler Geschwindigkeit angeordneten Konstantgeschwindigkeitsförderer (4) umfassen, und daß die Vorrichtung weiters eine Teigwägeeinrichtung (3) zum kontinuierlichen Messen des Gewichtes jedes an der Wägeeinrichtung vorbei geförderten Teigabschnitts umfaßt, wobei sich die Wägeeinrichtung (3) zwischen den Enden der Förderbahn des Förderers (2) mit variabler Geschwindigkeit befindet, eine Steuereinheit (11) zum Steuern der Geschwindigkeit des Förderers (2) mit variabler Geschwindigkeit mit einer Geschwindigkeit, die zum von der Wägeeinrichtung (3) gemessenen Gewicht des Teigabschnitts umgekehrt proportional ist, und auf der Förderbahn des Konstantgeschwindigkeitsförderers positionierte Teigbreitenbegrenzungsmittel (18).

2. Vorrichtung, wie in Anspruch 1 beansprucht, worin der Rollenmechanismus (6) frei drehbare, um eine endlose Rollenbahn angeordnete Rollen (7) umfaßt, wobei die Außenflächen der sich bewegenden Rollen eine geschlossene Hülle bilden und wobei die Rollen so angeordnet sind, daß sie sich entlang dieser Bahn fortbewegen, während sie durch den Kontakt mit dem Teig gedreht werden.

3. Vorrichtung, wie in Anspruch 1 beansprucht, worin der Rollenmechanismus frei drehbare, an einer geraden Rollenbahn angeordnete Rollen umfaßt, wobei die Rollen durch Antriebsmittel hin- und herbewegbar sind.

**Revendications**

1. Appareil pour produire en continu, à un débit d'écoulement sensiblement constant, une bande de pâte de dimensions transversales sensiblement constantes, comprenant : plusieurs transporteurs (2, 4) disposés en série, des moyens de maintien de pâte comprenant un mécanisme à rouleaux (6) disposé de façon à maintenir la pâte sur lesdits transporteurs (2, 4), ledit mécanisme à rouleaux (6) comprenant plusieurs rouleaux (7) pouvant tourner sur leurs axes et mobiles le long d'un trajet qui comprend une partie droite s'étendant au-dessus de parties desdits transporteurs (2, 4), afin de maintenir la pâte entre le mécanisme à rouleaux et les transporteurs ; caractérisé en ce que les transporteurs comprennent un transporteur (2) à vitesse variable destiné à faire avancer la pâte, et un transporteur (4) à vitesse constante disposé en aval et à proximité immédiate dudit transporteur (2) à vitesse variable, et en ce que l'appareil comprend en outre un dispositif (3) de pesage de la pâte destiné à mesurer en continu le poids de chaque portion de la pâte transportée de façon à passer par ledit dispositif de pesage, le dispositif de pesage (3) étant placé entre les extrémités du trajet de transport dudit transporteur (2) à vitesse variable, un bloc (11) de commande destiné à commander la vitesse du transporteur (2) à vitesse variable, à une vitesse inversement proportionnelle au poids d'une portion de pâte mesurée par le dispositif (3) de pesage de pâte, et des moyens (18) de limitation de la largeur de la pâte placés sur le trajet de transport dudit transporteur à vitesse constante.

2. Appareil selon la revendication 1, dans lequel ledit mécanisme (6) à rouleaux comprend des rouleaux (7) pouvant tourner librement, disposés le long d'un circuit sans fin de rouleaux, les périphéries des rouleaux en mouvement formant une enveloppe fermée, les rouleaux étant disposés de façon à progresser le long dudit trajet pendant qu'ils sont mis en rotation par leur contact avec la pâte.

3. Appareil selon la revendication 1, dans lequel ledit mécanisme à rouleaux comprend des rouleaux pouvant tourner librement, disposés sur un trajet droit de rouleaux, les rouleaux pouvant être animés d'un mouvement de va-et-vient par des moyens d'entraînement.

# FIG. I

# FIG. 2

# FIG. 3